# EUROPEAN PATENT APPLICATION

(11) **EP 3 457 553 A1**
(43) Date of publication of application: **20.03.2019**
(21) Application number: 17191072.2
(22) Date of filing: 14.09.2017
(51) Int. Cl.: H02M 7/5387

(54) **INVERTER FOR AN ELECTRIC VEHICLE, VEHICLE AND METHOD FOR OPERATING AN INVERTER**

(71) Applicant: Valeo Siemens eAutomotive Germany GmbH, 91056 Erlangen (DE)
(72) Inventor: BOHLLÄNDER, Marco, 96114 Hirschaid (DE); ZEBELEIN, Christian, 91052 Erlangen (DE)
(74) Representative: Dr. Gassner & Partner mbB

(57) **Abstract**

The invention discloses an inverter (1) for an electric vehicle (36), comprising a plurality of voltage-controlled semiconductor switching elements (10, 11) and a controller (12) with a failure detection unit (30) configured to determine if a predetermined failure condition is fulfilled and with a switching state setting unit (31) configured to transfer the switching elements (10, 11) into a safe switching state, characterized by a slope setting unit (18) configured to set a slope of gate (13) signals to the switching elements (10, 11) to a predetermined slope if the failure condition is fulfilled, wherein the controller (12) is configured to trigger the switching state setting unit (18) after having set the predetermined slope. In addition, an electric vehicle (36) and a method for operating the inverter (1) are disclosed.

## Description

The present invention relates to an inverter for an electric vehicle, comprising a plurality of voltage-controlled semiconductor switching elements and a controller with a failure detection unit configured to determine if a predetermined failure condition is fulfilled and with a switching state setting unit configured to transfer the switching elements into a safe switching state. Aside, the present invention relates to a vehicle and a method for operating an inverter.

Inverters are widely used to convert a DC voltage into a single or multiphase AC voltage. With respect to electric vehicles, such as battery electric vehicles (BEV) or hybrid electric vehicles, the inverter typically converts a DC voltage provided by a battery into a three-phase AC current for supplying an electric machine driving the vehicle. The inverter comprises a controller providing, particularly pulse width modulated (PWM), signals to gates of switching elements connected to an intermediate circuit, whereby the AC current results from the switching patterns of the switching elements.

To ensure a fail-safe operation of the inverter and/or the electric machine it is known to provide a failure detection unit to the controller which detects a failure state by evaluating a predetermined failure condition. In the case of a fulfillment of this failure condition a switching state setting unit transfers the switching elements into a safe switching state which is held by blocking a further pulsing. The safe switching state may be a switching configuration in which all switching elements are in their blocking state (Safe Pulse Off, SPO) or a switching configuration realizing an active short circuit (ASC) of the or at least two AC phases in which switching elements on the high potential of the DC voltage are in their conducting state and switching elements on the low potential of the DC voltage are in their blocking state or vice versa.

However, switching a switching element into its blocking state when a failure occurred may lead to high overvoltages in the switching path of the switching element resulting from a high slope of the gate signal's switching edge. In some cases, such an overvoltage may undesirably damage or even destroy one or more switching elements.

Thus, it is an object of the present invention to provide a possibility for a more robust operation of an inverter for an electric vehicle.

According to the present invention, this object is achieved by an inverter as initially described comprising a slope setting unit configured to set a slope of the falling edge of gate signals to the switching elements to a predetermined slope if the failure condition is fulfilled, wherein the controller is configured to trigger the switching state setting unit after having set the predetermined slope.

The invention bases upon the consideration to avoid undesired overvoltages by applying the predetermined slope of the gate signals' falling edges, e.g. to decrease their turn-off-speed (TOS), when a failure is detected by the failure detection unit before transferring the switching elements into the safe switching state. As a flatter slope of the gate signals' falling edges causes a lower di/dt overvoltages resulting from parasitic inductances may be reduced. With other words, the invention suggests a controller capable of ensuring that the safe switching state will be adopted only if the slope is relatively flat or the TOS is relatively slow, respectively. Thus, the controller may be configured to realize a certain span of time between setting the slope and the triggering of the switching state setting unit. Thereby, a fast TOS is typically preferred under failure-free operation conditions of the inverter, particularly when a DC voltage of low or medium magnitude is fed into the switching elements, since switching losses can be reduced and overvoltages are too low for damaging a switching element. Then, the inventive inverter may reduce the TOS before triggering the switching state setting unit. If the switching elements are already driven with a slow TOS, particularly the predetermined slope, e.g. due to relatively high DC voltages, it is preferred that the controller holds this TOS until triggering of the switching state setting unit.

The inventive inverter avoids undesired overvoltages when transferring the switching elements into their safe switching state, resulting in a longer life time of the switching elements. Advantageously, the inventive inverter thus allows a more robust operation than conventional ones.

The switching elements are typically connected to a half bridge for each phase of the inverter's AC output. Preferably, each switching element is a power transistor, e.g. with an insulated gate bipolar transistor (IGBT) structure or an insulated gate field effect transistor, particularly a metal-oxide-semiconductor field-effect transistor (MOSFET), structure or an junction field-effect transistor (JFET) structure. The controller may comprise a signal port connected to each gate of the switching elements. The controller may be adapted to provide a, particularly pulse-width-modulated signal pattern, to the ports for realizing the inverter's AC voltage. Aside, the switching state setting unit may affect the ports of the controller to transfer the switching elements into the safe switching state. Furthermore, the inverter may comprise driver units connected between the ports and the gates of the switching elements. The slope setting unit may be configured to change a series resistance connected with each gate for changing the slope. Preferably, the slope setting unit comprises a switch controllable by the controller which switches between series resistors of different resistance or switches a further resistor in parallel to a series resistor in order to reduce the series resistance. Typically, the slope setting unit allows to set the slope to the predetermined slope mode (i.e. a slow TOS), or to at least one steeper slope (i.e. a fast TOS).

With respect to the inventive inverter it is preferred that the failure condition comprises at least one comparison of an electrical quantity's value with a predetermined threshold. The thresholds may be chosen such that it defines operating ranges of the inverter for a normal operation. The inverter may comprise a measuring unit for acquiring the electrical quantities value and/or an input for measuring signals describing the electrical quantity.

The electrical quantity may be a voltage of the inverter's DC-link. This allows surveillance of an intermediate circuit voltage. Particularly with respect to the usage of IGBT as switching elements, the failure condition may avoid an overvoltage over the switching path of the switching element resulting from the addition of the DC-link voltage and voltage resulting from the di/dt through the parasitic inductance. Alternatively or additionally, the electrical quantity may be the current of the inverter's AC output. Thus, the failure detection unit may monitor the current flowing through the switching path of the switching element which is particularly preferred when using switching elements with a field-effect transistor structure. Consequently, one skilled in the art will choose appropriate electrical quantities and appropriate threshold values with respect to the design of the inverter.

As a first preferred embodiment according to the invention it is proposed that the controller comprises a second failure detection unit configured to determine if a second failure condition is fulfilled, wherein the second failure condition comprises at least one comparison of the electrical quantity's value with a second predetermined threshold value, wherein the triggering of the switching state setting unit takes place if the second failure condition is fulfilled. In this case the time span between setting the predetermined slope and triggering the switching state setting unit is realized by defining the first and the second failure condition, wherein the first failure condition is expediently chosen to be stricter than the second failure condition. A fulfillment of the first failure condition thus realizes setting the predetermined slope and the later fulfillment of the second failure condition triggers the switching state setting unit. This strategy is especially advantageous for the detection of overvoltage failures in the DC link which are characterized by high voltage gradients, e.g. of about 1 volt per microsecond. Preferably, the absolute value of the second threshold value is higher than the absolute value of the first threshold value.

As a further improvement, the controller may be configured to restore the slope having been applied to the switching elements before setting the predetermined slope if the first failure condition is no longer fulfilled and the second failure conditions has not been fulfilled. This allows an appropriate handling of minor failures which do not justify the safe switching state.

According to a second, preferred embodiment of the invention the failure detection unit is configured to output a signal if the failure condition is fulfilled, wherein the controller comprises a delay unit configured to delay the signal by a predetermined delay time and to realize the triggering of the switching state unit by the delayed signal. In this case the definition of only one failure condition is necessary. The time span between setting the predetermined slope and triggering the switching state setting unit is realized by delaying the signal emanating from the failure detection unit for an appropriate amount of time. This delay time may be chosen between 5 and 50 microseconds, preferably between 10 and 20 microseconds. The delay element may be realized by an RC-element with a suitable time constant.

With respect to the inventive inverter it is furthermore preferred that the controller comprises a slope adjustment unit configured to trigger the slope setting unit depending on at least one operation parameter of the inverter. The slope adjustment unit provides another possibility for varying of the slope, particularly within normal, i.e. failure-free, operating ranges of the inverter. Those operation ranges refer to the above-mentioned application of a steep slope or fast TOS when the DC voltage is rather low or a flat slope or slow TOS at higher DC voltages, respectively. Thus, the slope adjustment unit allows a more flexible and efficient operation of the inverter.

Exemplarily, the operation parameter is the or an electrical quantity. This way, the slope may be adjusted depending on the voltage of the inverter's DC-link and/or a current of the inverter's AC output or another electrical quantity in order to achieve an efficient operation of the inverter. Alternatively or additionally, the operation parameter is a junction temperature of at least one of the switching elements. The consideration of the junction temperature allows a further improvement of the inverter's efficiency by operating the switching elements in an optimal temperature-depending range.

Advantageously, the controller comprises a release unit configured to allow and to prohibit the slope adjustment unit to adjust the slope, wherein the release unit prohibits the slope adjustment unit to adjust the slope if the first failure condition is fulfilled. With other words, the release unit allows overriding the slope adjustment unit by the slope setting unit which is triggered in a failure case. The release unit may be realized by a logical OR-conjunction to the slope adjustment unit's output with the failure detection unit's output, when the predetermined (flat) slope is represented by a logical one, or a respective AND-conjunction, when the predetermined slope is represented by a logical zero.

Aside, the slope adjustment unit is preferably implemented in a microcontroller. This allows a software-based implementation of the slope adjustment unit's function together with other controller functions.

On the other hand, the first failure detection unit and/or the second failure detection unit and/or the delay unit and/or the release unit are implemented in a programmable logic array, particularly a complex programmable logic device. Such a hardware-based implementation allows a very fast detection and handling of failures. Thus, the afore-mentioned controller units may be designed as an independent bypass dedicated to the failure management of the inverter. That way, the benefits of a flexible slope adjustment, particularly realized by the microcontroller, and the fast handling of failure states by the programmable logic array are advantageously combined.

With respect to the inventive inverter the safe switching state may be a switching configuration in which all switching elements are blocking. This means to control the gates of all switching elements to block the switching path, which may be considered as a safe pulse off (SPO) mode. Alternatively, the safe switching state may be an active short circuit of the inverter's AC output phases. An active short circuit (ASC) is characterized by a switching configuration where at least two or all low-side switching elements are blocking and at least two or all high-side switching elements are conducting or vice versa. When transferring the inverter from its pulsing state to the safe switching state, the switching state (conducting or blocking) of some switching elements may accidentally be already the switching state that is to be adopted in the safe switching state. Then transferring means to remain this switching state of a respective switching element. After having reached the safe switching state further switching or pulsing, respectively, is typically blocked.

According to the present invention, a vehicle is provided, comprising an electric machine for driving the vehicle, a DC power source and an inventive inverter configured to convert a voltage of the DC power source to a multiphase AC voltage supplying the electric machine.

Furthermore, according to the invention, a method for operation an inverter is provided, comprising a plurality of voltage-controlled semiconductor switching elements and a controller, wherein the controller determines if a predetermined failure condition is fulfilled and sets a slope of the falling edge of gate signals to the switching elements to a predetermined slope if the failure condition is fulfilled, whereafter the controller transfers the switching elements into a safe switching state.

All statements referring to the inventive inverter apply analogously to the inventive vehicle and the inventive method, so that the above-mentioned advantages of the inverter may be achieved by the vehicle and the method as well.

Further details and advantages of the invention are disclosed in the following, whereby reference is made to the principle drawings showing:
- Fig. 1: a schematic diagram of a first and second embodiment of an inverter according to the invention with further components;
- Fig. 2: a block diagram of a controller of the first embodiment of the inverter depicted in Fig. 1;
- Fig. 3: a block diagram of a controller of the second embodiment of the inverter depicted in Fig. 1; and
- Fig. 4: a principle drawing of an embodiment of a vehicle according to the invention.

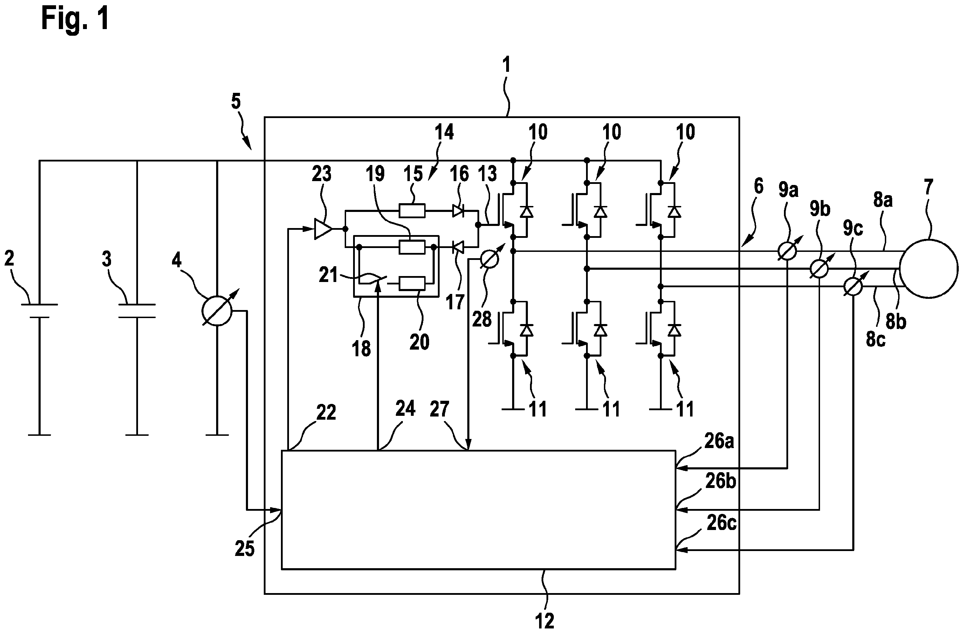

Fig. 1 is a schematic diagram of a first and second embodiment of an inverter 1 connected to a DC power source 2, to an DC-link capacitor 3 and to a voltage measuring device 4 on a DC connection 5 on the inverter 1. The AC output 6 of the inverter 1 provides a three-phase AC-current to an electrical machine 7, whereby each phase 8a, 8b, 8c comprises a current measuring device 9a, 9c, 9b, e.g. a shunt.

The inverter 1 comprises a pair of switching elements 10, 11 connected in series to a half bridge for each phase 8a, 8b, 8c. The switching elements 10, 11 may be IGBT, IGFET (e.g. power MOSFETs) or other voltage-controlled semiconductor switching elements and comprise a free-wheeling diode. As all switching elements 10, 11 are equally connected to a controller 12 of the inverter the circuitry of the switching elements 10, 11 is described only with reference to the switching element 10 of the phase 8a. Thus, the following details apply to the other switching elements 10, 11 as well.

A gate 13 of the switching element 10 is connected to a circuitry 14, comprising a series resistor 15 connected in series with a diode 16 which allows current to flow into the gate 13 for charging a gate capacity (not shown) of the switching element 10 when switching it into its conducting switching state.

Furthermore, the circuitry 14 comprises a diode 17 connected in series with a slope setting unit 18 of the inverter 1 both connected in parallel to the series resistor 15 and the diode 16. The diode 17 allows current to flow out of the gate 13 for discharging the gate capacity when switching the switching element 10 into its blocking state. The slope setting unit 18 comprises a first series resistor 19 connected in parallel to a second series resistor 20, whereby the second series resistor 20 is connected in series to a switch 21 (e.g. a transistor) controllable by the controller 12. In the open switching state of the switch 21 the series resistance of the gate 13 is higher than in the closed switching state. The series resistance and the gate capacity build a low pass with a certain time constant. Thus, in the open switching state of the switch 21 a relatively high time constant is applied, which results in a flatter slope of a switching edge of the switching element 10. On the other hand, in the closed switching state of the switch 21 a relatively low time constant is applied, which results in a steeper slope of the switching edge of the switching element 10. Thereby, a flat slope relates to a slow turn-off-speed (TOS) of the switching element 10 and a steep slope relates to a fast TOS of the switching element 10.

Additionally, a driver unit 23 is connected in series between a port 22 for controlling the switching element 10 and the circuitry 14. The driver unit 23 amplifies the signals from the port 22 to a suitable voltage for controlling the gate 13. Another port 24 of the controller 12 is provided for controlling the switch 21 of the slope setting unit 18. Note that the controller 12 comprises ports 22, 24 for each switching element 10, 11 in order to control their gates 13 independently via respective drivers 23 and circuitries 14. Furthermore, the controller 12 comprises an input port 25 connected to the voltage measuring device 4, input ports 26a, 26b, 26c connect to the current measuring devices 9a, 9b, 9c and one or more input ports 27 connected to temperature measuring devices 28 monitoring a temperature from which a junction temperature of the switching elements 10, 11 is derivable.

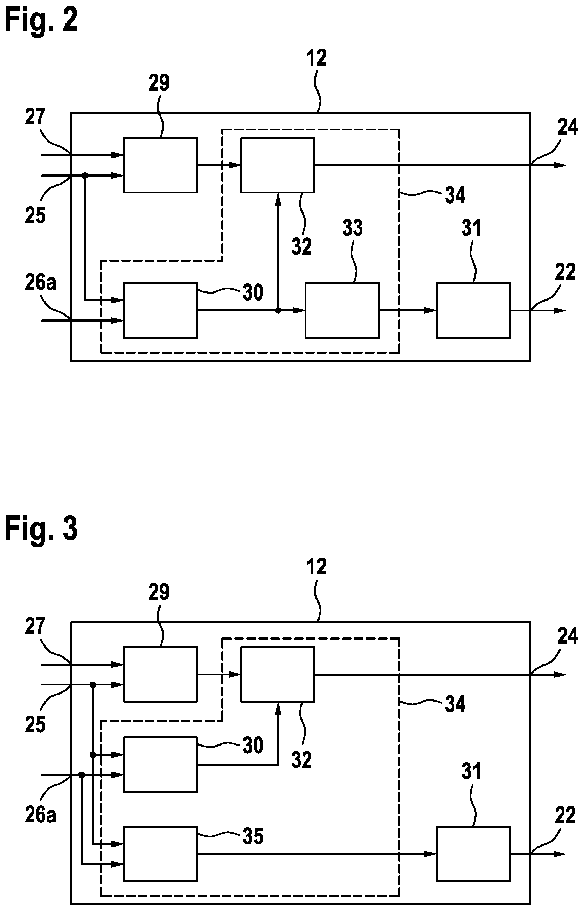

Fig. 2 is a block diagram of the controller 12 of the first embodiment of the inverter 1 depicted in fig. 1. Thereby, for reasons of simplicity only the part of the controller 12 controlling the switching element 10 depicted in detail in fig. 1 is shown in fig. 2.

The controller 12 comprises a slope adjustment unit 29 configured to trigger the slope setting unit 18 via port 24 depending on operation parameters of the inverter 1 which are the junction temperature obtained via port 27 and the DC-link voltage obtained via port 25. Within a normal operation state of the inverter 1 the slope adjustment unit 29 allows to set the slope of the switching element 10 to a flat or steep slope for an efficient operation of the inverter 1. Thereby, a steep slope or a fast TOS, respectively, results in reduced switching losses but higher overvoltages and is therefore only applied for DC-link voltages in a low or medium range. In contrast, the slope adjustment unit 29 applies a flat slope at DC-link voltages in a rather high range.

Furthermore, the controller 12 comprises a failure detection unit 30 configured to determine if a predetermined failure condition is fulfilled and to output a signal if the failure condition is fulfilled. The failure condition comprises a comparison of the value of DC-link voltage obtained via port 25 with a predetermined threshold value and comparison of the absolute instantaneous value of the AC current obtained via port 26a with another predetermined threshold value. If one of these threshold values is reached or exceeded the failure detection unit detects a failure and the switching elements 10, 11 have to be transferred into a safe switching state.

Thereto, the controller 12 comprises a switching state setting unit 31 connected to port 22 and all respective ports controlling the gates 13 of the switching elements 10, 11. The safe switching state is an active short circuit of the inverter's 1 AC output 6 realized by setting all high side switching elements 10 to their conducting state and all low side switching elements 11 to their blocking state or vice versa.

Alternatively, the safe switching state is a stopping of pulsing the switching elements 10, 11 by setting all of them to their blocking state.

However, switching the switching elements 10, 11 to their blocking state may result in high overvoltages which may damage or even destroy the switching elements 10, 11. Therefore, the failure detection unit's 30 signal is fed to a release unit 32 of the controller 12. The release unit 32 is connected between the slope adjustment unit 29 and the port 24 and configured to allow and to prohibit the slope adjustment unit 29 to adjust the slope. That is, the signal from the failure detection unit 30 overrides the current slope applied to the slope setting unit 18 by the slope adjustment unit 30 and controls the slope setting unit 18 to apply a flat slope by opening the switch 21. The release unit 32 may be realized by a logical OR-conjunction of the output signal of the slope adjustment unit 29 and the signal of the failure detection unit 30 when opening the switch 21 triggered by a logical one on port 24. Alternatively, if opening the switch 21 is triggered by a logical zero on port 24, the release unit 32 may comprise a logical AND-conjunction of the afore-mentioned signals.

To ensure that the slope is set to the predetermined flat slope in the case of a fulfillment of the failure condition before transferring the switching elements 10, 11 to their safe switching state, the controller 12 comprises a delay unit 33 connected between the failure detection unit 30 and the switching state setting unit 31. The delay unit 33 delays the signal from the failure detection unit 30 for at least the time span which is required by the switch 21 triggered by port 24 for having assuredly opened, e.g. 10, 15 or 20 microseconds. Thus, the switching state setting unit 31 is triggered after the slope has been set to the flat slope to avoid harmful overvoltages when setting the switching elements 10, 11 to their blocking state.

The slope adjustment unit 29 is implemented in a microcontroller which realizes the pulsing of the switching elements 10, 11 by a pulse width modulated switching pattern as well. In order to allow fast failure detection being independent from the time slices of the microcontroller the failure detection unit 30, the release element 32 and the delay unit 33 are implemented in a programmable logic array 34, e.g. a complex programmable logic device or a field programmable gate array. Thus, the controller 12 realizes a bypass structure for the failure detection that allows overriding the slope adjustment by the microcontroller immediately.

Fig. 3 is a block diagram of the controller 12 according to the second embodiment of the inverter 1 depicted in fig. 1. Again, for reasons of simplicity only the part of the controller 12 controlling the switching element 10 depicted in detail in fig. 1 is shown in fig. 3. The controller 12 according to the second embodiment differs basically from the controller depicted in fig. 2 in that the delay element 33 is omitted, and two failure detection units 30, 35 are provided.

Both the first failure detection unit 30 and the second failure detection unit 35 are connected to the ports 25, 26a. Thereby, the first failure detection unit 30 compares the values obtained from the ports 25, 26a with respective first threshold values and the second failure detection unit 25 with respective second threshold values. Thereby, the first threshold values are stricter than the second threshold value. That is, the absolute value of the second threshold value is higher than the absolute value of the first threshold value.

The first failure detection unit 30 is connected to the release unit 32 which allows overriding the slope set by the slope adjustment unit 29 if the first failure condition is fulfilled. On the other hand, the second failure detection unit 35 is directly connected to the switching state setting unit 31. In the case of a failure the stricter first failure value is reached before the second threshold value is reached. Thus, the signal of first failure detection unit 30 overrides the slope adjusted by the slope adjustment unit 29 before the second failure detection unit 35 triggers the switching state setting unit 31 to transfer the switching elements 10, 11 to the safe switching state. Thereby, the time span between setting the flat slope and the triggering of the switching state setting unit 31 is defined by the difference between the respective first and second threshold values and the expected changing rate of the values obtained by the ports 25, 26a.

Additionally, the controller 12 stops overriding the slope adjustment when the first failure condition is fulfilled but no fulfillment of the second failure condition occurs. Thus, if the first failure condition has been fulfilled without a fulfillment of the second failure condition afterwards the controller 12 may step back to its normal operating behavior which allows the slope adjustment unit 29 to set the slope.

According to other embodiments which correspond to the afore-mentioned one's the measuring devices 4, 9a, 9b, 9c may be integrated into the inverter 1.

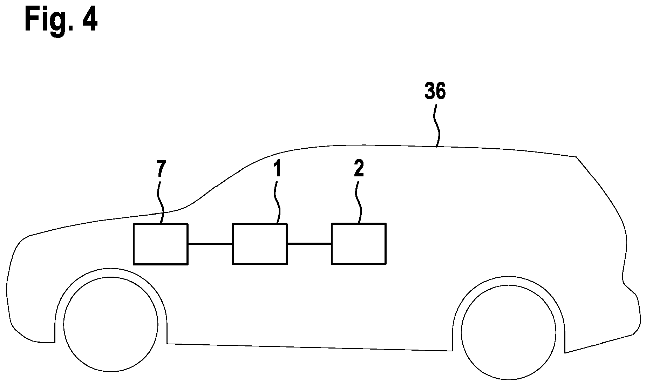

Fig. 4 is a principle drawing of an embodiment of a vehicle 36, comprising an electrical machine 7, a DC power source 2, e.g. a high voltage battery with a nominal voltage of more than 60 volts, particularly more the 200 volts, and an inverter 1 according to one of the afore-mentioned embodiments. The inverter 1 is configured to convert a voltage of the DC power source 2 into a multiphase AC voltage supplying the electric machine 7.

## Claims

1. Inverter (1) for an electric vehicle (36), comprising a plurality of voltage-controlled semiconductor switching elements (10, 11) and a controller (12) with a failure detection unit (30) configured to determine if a predetermined failure condition is fulfilled and with a switching state setting unit (31) configured to transfer the switching elements (10, 11) into a safe switching state, **characterized by** a slope setting unit (18) configured to set a slope of the falling edge of gate (13) signals to the switching elements (10, 11) to a predetermined slope if the failure condition is fulfilled, wherein the controller (12) is configured to trigger the switching state setting unit (18) after having set the predetermined slope.

2. Inverter according to claim 1, **characterized in that** the failure condition comprises at least one comparison of an electrical quantity's value with a predetermined threshold value.

3. Inverter according to claim 2, **characterized in that** the electrical quantity is a voltage of the inverter's (1) DC-link and/or a current of the inverter's (1) AC output (6).

4. Inverter according to claim 2 or 3, **characterized in that** the controller (12) comprises a second failure detection unit (35) configured to determine if a second failure condition is fulfilled, wherein the second failure condition comprises at least one comparison of the electrical quantity's value with a second predetermined threshold value, wherein the triggering of the switching state setting unit (18) takes place if the second failure condition is fulfilled.

5. Inverter according to claim 4, **characterized in that** the absolute value of the second threshold value is higher that the absolute value of the first threshold value.

6. Inverter according to one of the claims 1 to 3, **characterized in that** the failure detection unit (30) is configured to output a signal if the failure condition is fulfilled, wherein the controller comprises a delay unit (33) configured to delay the signal by a predetermined delay time and to realize the triggering of the switching state unit (18) by the delayed signal.

7. Inverter according to claim 6, **characterized in that** the delay time is between 5 and 50 microseconds, preferably between 10 and 20 microseconds.

8. Inverter according to one of the preceding claims, **characterized in that** the controller comprises a slope adjustment unit (29) configured to trigger the slope setting unit (18) depending on at least one operation parameter of the inverter (1).

9. Inverter according to claim 8, **characterized in that** the operation parameter is the or an electrical quantity and/or a junction temperature of at least one of the switching elements (10, 11).

10. Inverter according to claim 8 or 9, **characterized in that** the controller (12) comprises a release unit (32) configured to allow and to prohibit the slope adjustment unit (29) to adjust the slope, wherein the release unit (32) prohibits the slope adjustment unit (29) to adjust the slope if the first failure condition is fulfilled.

11. Inverter according to one of the claims 8 to 10, **characterized in that** the slope adjustment unit (29) is implemented in a microcontroller.

12. Inverter according to one of the preceding claims, **characterized in that** the first failure detection unit (30) and/or the second failure detection unit (35) and/or the delay unit (33) and/or the release unit (32) are implemented in a programmable logic array (34), particularly a complex programmable logic device.

13. Inverter according to one of the preceding claims, **characterized in that** the safe switching state is a switching configuration in which all switching elements are blocking (10, 11) or a switching configuration realizing an active short circuit of AC output phases (8a, 8b, 8c) of the inverter (1).

14. Vehicle (36), comprising an electric machine (7) for driving the vehicle (36), a DC power source (2) and an inverter (1) according to one of the preceding claims configured to convert a voltage of the DC power source (2) to a multiphase AC voltage supplying the electric machine (7).

15. Method for operating an inverter (1) comprising a plurality of voltage-controlled semiconductor switching elements (10, 11) and a controller (12), wherein the controller (12) determines if a predetermined failure condition is fulfilled and sets a slope of the falling edge of gate (13) signals to the switching elements (10, 11) to a predetermined slope if the failure condition is fulfilled, whereafter the controller (12) transfers the switching elements (10, 11) into a safe switching state.
